# EUROPEAN PATENT SPECIFICATION

(11) **EP 1 624 744 B1**
(45) Date of publication and mention of the grant of the patent: **04.04.2007**
(21) Application number: 03719961.9
(22) Date of filing: 28.04.2003
(51) Int. Cl.: A01D 34/00

(54) **Mower deck with cleaning nozzle**
Mähwerksgehaüse mit Düse
Chassis de tondeuse avec gicleur

(43) Date of publication of application: 15.02.2006
(73) Proprietor: MTD PRODUCTS INC., Valley City, Ohio 44280-9711 (US)
(72) Inventor: KASANIC, Joseph M., Medina, Ohio 44256 (US); SADOSKY, Peter D., Parma, Ohio 44129 (US)
(74) Representative: Wilson, Alan Stuart
(86) International application number: PCT/US2003/013126
(87) International publication number: WO 2004/098266

(56) References cited:
- DE-A- 19 925 605
- US-A- 3 535 862
- US-A- 5 444 967
- US-A1- 2002 170 281
- US-B1- 6 260 340

## Description

### I. Background of the Invention

### A. Field of Invention

This invention pertains to the art of methods and apparatuses for cleaning the interior of a mower deck.

### B. Description of the Related Art

It is known in the art that vegetation clippings gather on the under side of a mower deck during the mowing of grass or other vegetation. The clippings prevent efficient operation of the mower deck. It is therefore desirable to keep the under side of the mower deck clean.

Cleaning the under side of a mower deck may require the operator to disconnect the mower deck and/or flip over the mower deck to gain access to the under side. This process can be cumbersome and messy. In that mower decks and the mowers to which they are attached are heavy, it may be difficult to flip over the mower deck.

One type of cleaning apparatus for mower decks includes water nozzles fixedly attached to a mower deck; the water nozzle having a discharge end disposed interior to the mower deck housing and positioned facing toward the ground. In this manner, the water simply drips out of the end water nozzle. Supply water is connected to an inlet end of the nozzle extending exterior to the mower deck housing. One aspect of this type of nozzle is that the water is simply dropped vertically from the nozzle discharge end onto the mower blade, wherein the water is subsequently dispersed about the interior on the mower deck during operation thereof. However, this is inefficient for cleaning the entire surface of the interior of the mower deck unless numerous water nozzles are implemented.

An example of such a known cleaning system is shown in US 2002/170281, which discloses a mower cleaning nozzle which extends through a hole in the deck of a mower and has a plurality of orifices. US 6 260 340 also discloses a mower cleaning system, which comprises a flexible tubing attached to an outer surface of the mower deck and a number of fittings extending through the mower deck and through the side walls of the tubing, allowing water to be drawn from the tubing to the underside of the deck. A further example is shown in US 5 444 967, which discloses a device mounted onto the deck of the mower enabling connection of a hose for cleaning of the underside of the deck.

The present invention provides apparatuses for cleaning the interior side of a mower deck without having to maneuver the mower and by introducing water to clean the under side of the mower deck in an effective manner by uniquely positioning and orienting water nozzles with respect to the rotation of the mowing blades. This is accomplished in a way that minimizes the number of nozzles required to clean the mower deck.

### Summary of the Invention

One aspect of the present invention includes a water nozzle fixed to the mower deck, wherein the water nozzle directs water to the mower blade for cleaning both the blades and the interior of the mower deck. The water nozzle is oriented to direct the water stream spray width tangential to the rotation of the mower blades.

The present invention provides a mower deck comprising: a deck housing having an interior and an exterior; a predetermined number of mowing blades operatively rotatably connected with respect to the deck housing; and a predetermined number of nozzles having first and second ends respectively, the first ends of the predetermined number of nozzles extending into the interior of the mower deck housing, the second ends of the predetermined number of nozzles extending exterior to the mower deck housing, wherein the predetermined number of nozzles each include an aperture for discharging an associated water stream; the mower deck characterised in that the predetermined number of nozzles is one less that the predetermined number of mowing blades.

Each nozzle may have longitudinally fashioned therein an aperture for channelling water through the nozzle. The first end of the nozzle may include side bores that laterally direct the flow of water within the mower deck housing. This acts to clean the interior sides of the deck housing and the blades.

Still other benefits and advantages of the invention will become apparent to those skilled in the art to which it pertains upon a reading and understanding of the following detailed specification.

### III. Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is a side view of a mower with a mower deck.
FIGURE 2 is a side view of the mower deck with nozzle and water conduit.
FIGURE 3 is a side view of the water nozzle.
FIGURE 4 is a cross section view of the water nozzle.
FIGURE 5 is a partial cross section view of the water nozzle of an alternate embodiment.
FIGURE 6 is a bottom view of a two-bladed rear discharge mower deck with two water nozzles.
FIGURE 7 is a bottom view of a three-bladed mower deck with only two water nozzles.
FIGURE 8 is a bottom view of a two-bladed side discharge mower deck with only a single water nozzle.

### IV. Description of the Preferred Embodiment

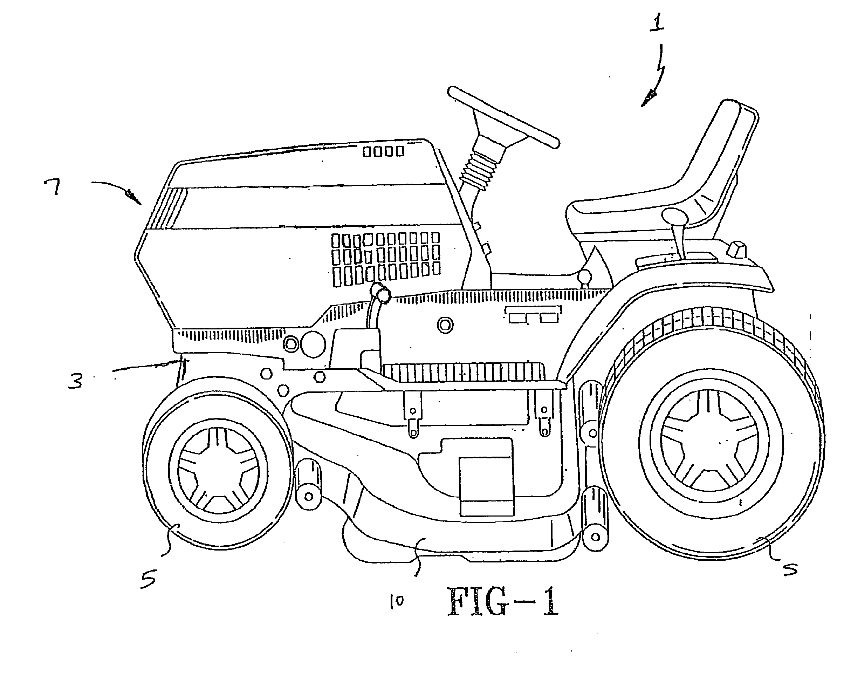

Referring now to the drawings wherein the showings are for purposes of illustrating a preferred embodiment of the invention only and not for purposes of limiting the same, FIGURE 1 depicts a riding vegetation mower shown generally at 1. The riding mower 1 may include a frame 3 providing structural support for the mower 1, wheels 5 for use in providing mobility to the mower and an engine 7 for use in providing power to the mower 1. A mower deck 10 is attached to the frame 3 of the mower 1 in a manner well known in the art and may be selectively removable. It is also contemplated that the mower deck may be permanently attached to the frame of a mower, as is the case of walk-behind mower not shown in the figures. It is noted at this point that as the present invention relates to a mower deck, the invention is not limited to a mower deck attached to a riding mower but may apply to a mower deck permanently attached to or selectively detachable from any vegetation cutting device.

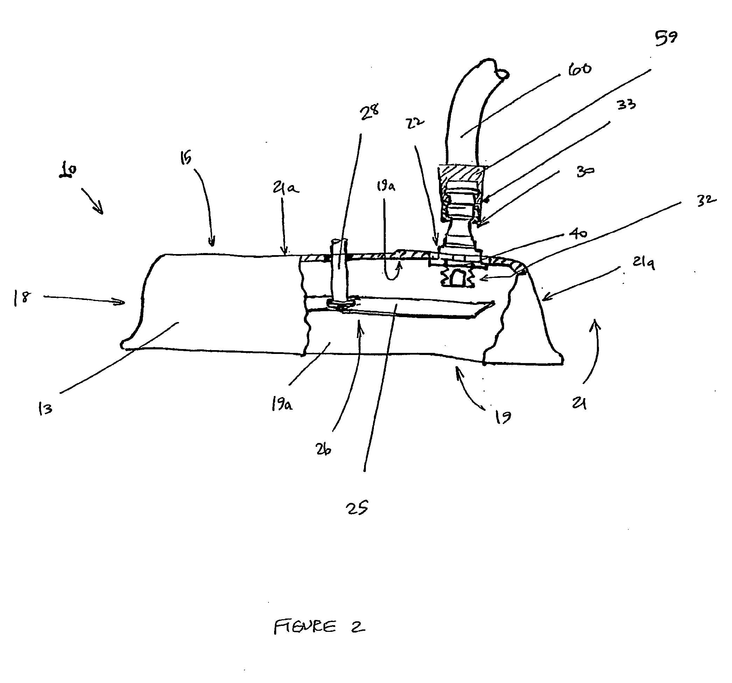

With reference now to Figure 2, a mower deck 10 not according to the present invention is shown. In this embodiment, the mower deck 10 includes a housing 13. The housing 13 may include a top wall 15 and sidewalls 18 that extend around a periphery of the top wall 15. In this manner, the walls 15, 18 formed a concave deck housing 13 defining an interior region 19 and an exterior region 21. Similarly, the deck housing 13 may include an interior surface 19a and an exterior surface 21 a. A mowing blade 25 is rotatably attached to the deck housing 13. The mowing blade 25 may include a spindle 26 and shaft 28 that extends from the interior 19 of the deck housing 13 to the exterior 21. The shaft 28 may be communicated to a power take off shaft, not shown, in a manner well known in the art. It is expressly noted that any means of communicating power from the engine to drive the shaft 28 and mowing blade 25 may be chosen with sound engineering judgment.

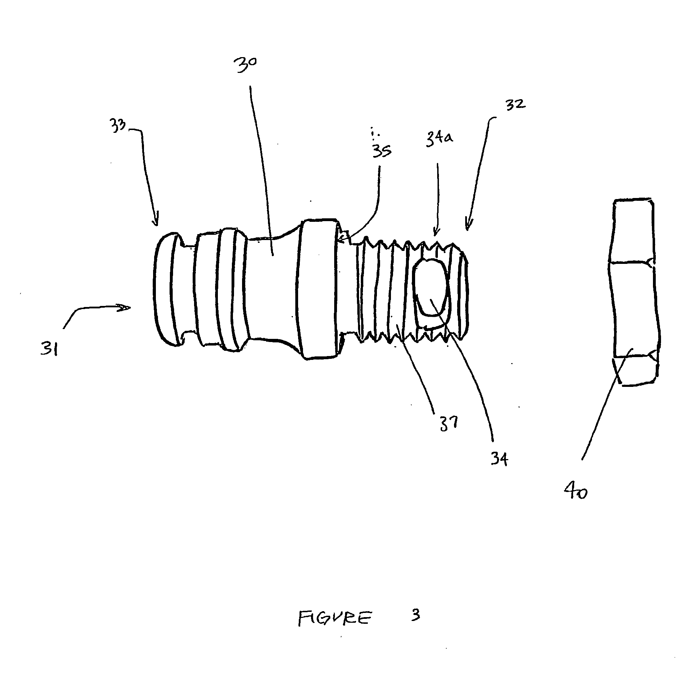

With continued reference to Figure 2 and now to Figure 3, a cleaning nozzle 30 is depicted attached to the top wall 15 of the deck housing 13. The cleaning nozzle 30 may be a water nozzle 30 having first and second ends 32, 33 respectively. The nozzle 30 may be inserted through an aperture formed in the top wall 15 of the deck housing 13. The aperture may be sized to allow a first mounting surface 35 of the nozzle 30 to abut the exterior surface 21a of the top wall 15. In this manner, the first end 32 of the nozzle 30 extends into the interior region 19 of the deck housing 13 and the second end 33 of the nozzle 30 is disposed about the exterior region 21 of the top of the deck housing 13. The first end 32 of the nozzle 30 may include threads 37 that engage a fastening nut 40. As is well known in the art, the fastening nut 40 may include threads, not shown, fashioned about a hole in the fastening nut 40 that mate with the threads 37 of the first end 32 of the nozzle 30. When the first end 32 of the nozzle 30 is inserted through the aperture formed in the wall 15, the fastening nut 40 may be threaded onto the threads 37 of the nozzle 30 and tightened to fixedly secure the nozzle 30 to the deck housing 13. Alternately, the first end of the nozzle 30 may be constructed of a resiliently deformable material such that the nozzle may be snap fit into the aperture. However, any means of mounting the nozzle 30 into the aperture of the mower deck may be chosen with sound engineering judgment.

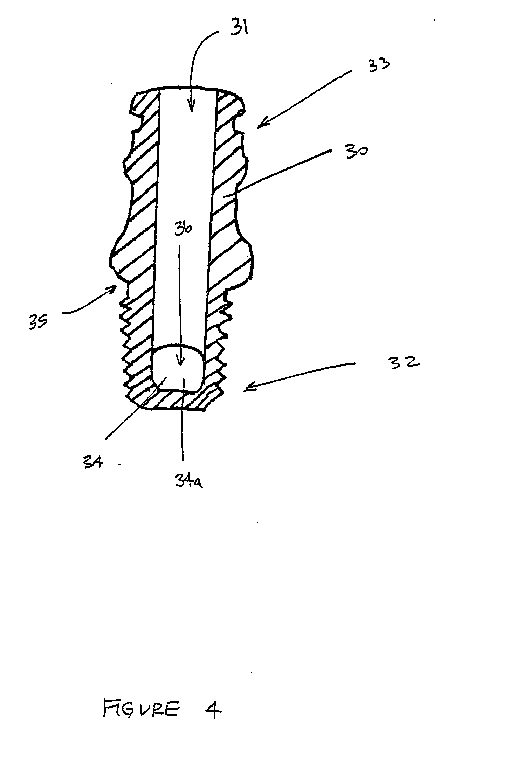

With continued reference to Figure 3 and now to Figure 4, the nozzle 30 may have a nozzle bore 31 fashioned in the second end 33 of the nozzle 30 and traversing longitudinally to the first end 32. It is noted the nozzle bore 31 stops short, in a longitudinal direction, from the first end 32 of the nozzle 30. Subsequently, side bores 34, 34a may be fashioned axially in the first end 32 of the nozzle 30 connecting with the longitudinally fashioned nozzle bore 31 to form a channel 36. In this manner, the channel 36 may direct water, communicated from a water conduit to be discussed in a subsequent paragraph, through the nozzle 30 into the interior region 19 of the deck housing 13. It is expressly noted that the water directed through the channel 36 changes direction from a downward or longitudinal direction to a lateral direction as clearly shown in the Figures. As water is supplied under pressure, the water is directed onto the mowing blade 25, which may be rotating, to the interior surface 19a of the deck housing 13 to clean the surface 19a of the deck housing 13.

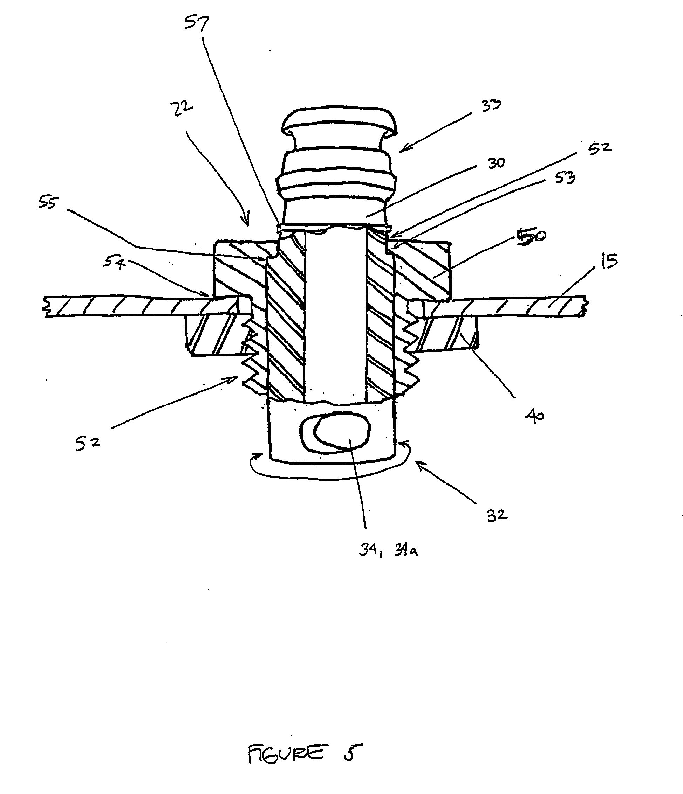

With reference now to Figure 5, an alternate embodiment of a nozzle that may be used with this invention is shown. The nozzle 30 may be received into a bushing 50. In this embodiment, the bushing 50 is received into the aperture 22 of the top wall 15 of the deck housing 13. The bushing 50 may have a first threaded end 52 and a second end 53 having flats 54 that abut the exterior surface of the top wall 15. In this manner, the bushing is prevented from slipping through the aperture 22 into the interior region 19. Similar to the preferred embodiment, the fastening nut 40 may be screwed onto the threads of the bushing 50 fixedly securing the bushing to the deck housing 13. The nozzle 30 may include a reduced diameter portion 52. This creates a seat portion 53 that seats against a counterbore 55 in the bushing 50. In this manner, the nozzle 30 is prevented from sliding upward out the top of the deck housing 13 because of the counterbore portion 55 that contacts the seat portion 53 of the nozzle 30. Additionally, a snap ring 57 may be secured to a groove, not shown, fashioned in the nozzle 30 to prevent the nozzle 30 from sliding downward into the interior region 19 of the deck housing 13. The bushing clearance with respect to the outer dimension of nozzle 30 may be slip fit such that the nozzle 30 may be turned or rotated with respect to the bushing 50 and the deck housing 30. In this manner, the nozzle 30 is rotatably connected with respect to the mower deck and the deck housing 13. It is noted that manually rotating the nozzle 30 selectively directs the water flowing laterally out from the first end 32 of the nozzle 30. As the nozzle is rotated through 180 degrees, the water is directed to clean to the entire 360 degree interior surface 19a. The amount of slip fit between the nozzle 30 and the bushing 50 may be chosen with sound engineering. Additionally, any type of material for constructing the nozzle and the bushing may be chosen with sound engineering judgment.

With reference again to Figures 2 and 3, the nozzle 30 may have a quick disconnect second end 33. That is to say, that the configuration of the second end 33 of the nozzle 30 may be adapted to received a water conduit 60 having a quick release fitting 59. In that quick release fittings are well known in the art, no further explanation will be offered at this point. As previously mentioned, the nozzle 30 may receive a water conduit 60 through which water flows under pressure to be diverted from the side bores 34, 34a to the interior surface 19a of the deck housing 13. In this manner, the water is diverted onto the mowing blade 25 to the sides of the deck housing 13. In other words, the cleaning action of the water flowing through the nozzle 30 utilizes the motion of the mowing blade 25 to propel the water for cleaning purposes.

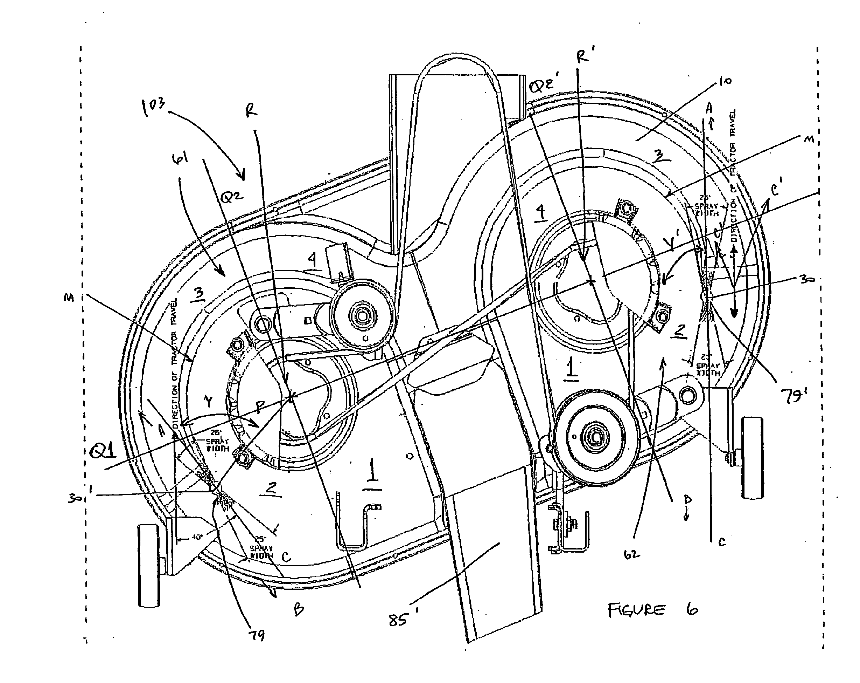

With reference now to Figure 6, a two blade rear discharge deck is shown. The mower deck 10 may include first and second mowing blades, shown generally at 61, 62. For this embodiment, the mowing blades 61, 62 are counter rotating. In other words, the first mowing blade 61 may rotate clockwise and the second mowing blade 62 may rotate counterclockwise. This functions to draw the severed vegetation into the center of the mower deck 10 for center discharge, which may be rearward center discharge. However, it should be noted that the mower deck 10 may alternately be a side discharge mower deck to be discussed in a subsequent paragraph. The mower deck 10 may also include first and second nozzles 30, 30' attached thereto in a manner described above. The nozzles 30, 30' may have a spray width ranging from 10 degrees to 60 degrees. However, preferably the spray width ranges from 20 degrees to 30 degrees. In the one embodiment, the spray width is 25 degrees. The nozzles 30, 30' may be positioned proximate to the outer periphery of the mower deck 10. In the preferred embodiment, the nozzles 30, 30' may be directed such that the centerline of water discharge C is substantially tangent to a circle M defined by the rotation of the mowing blades 61, 62 respectively. In this manner, the 25 degrees spray width overlaps the rotation of the blades, as well as allows the nozzle to direct water toward the sides of the mower deck 10. It should be noted that the water is sprayed from the nozzle in two substantially opposite directions, as shown in the figures. This directs water in a first direction A against the rotation of the mowing blades 61, 62 and in a second direction B with the motion of the mowing blades 61, 62 respectively. It should be noted that the present embodiment of the subject invention is directed toward utilizing two nozzles. This is important because the position and orientation of the two (2) nozzles is effective in cleaning substantially the entire interior of the mower deck 10, which reduces cost while still accomplishing the intended desire of cleaning debris from the interior of the mower deck 10 with water.

With continued reference to Figure 6, the orientation of the nozzles 30, 30' will now be discussed. The nozzles 30, 30' may be oriented so that the water stream in channeled to direct water partially onto the blades and partially onto the sides of the mower deck 10. A line P, P' is defined by the center of the nozzles 79, 79' and the center point of rotation R, R' of the mowing blades respectively. The water nozzles 30, 30' may be respectively oriented such that an angle Y, Y' is formed between the centerline of water discharge C, C' and the line P, P' respectively. The angle Y, Y' may be chosen such that the water stream discharges water substantially tangential to the circumference defined by the mowing blades and such that the water does not spray directly on the mowing blade spindles respectively. In this manner, the water may be channeled partially onto the blades and partially onto the mower deck sides. For example, utilizing a spray width of 25 degrees, the angle Y, Y' may be 85 degrees. In this way, 17.5 degrees of the water stream is directed over the mowing blade. The angle Y, Y' may range from 50 degrees to 130 degrees. However, any angle Y,Y' may be chosen with sound engineering judgment as is appropriate for cleaning the interior of the mower deck 10. The above mentioned orientation of the nozzles is effective for dispensing water such that the water is carried by the momentum of rotating blades 61, 62 and propelled throughout the interior of the mower deck 10. In other words, the centerline of discharge of the nozzles may be oriented substantially tangent to the circumference defined by the mowing blades. And alternately, the centerline of discharge may be oriented at angle with respect to a tangent line of the circumference of travel of the mowing blades in either direction by up to 40 degrees.

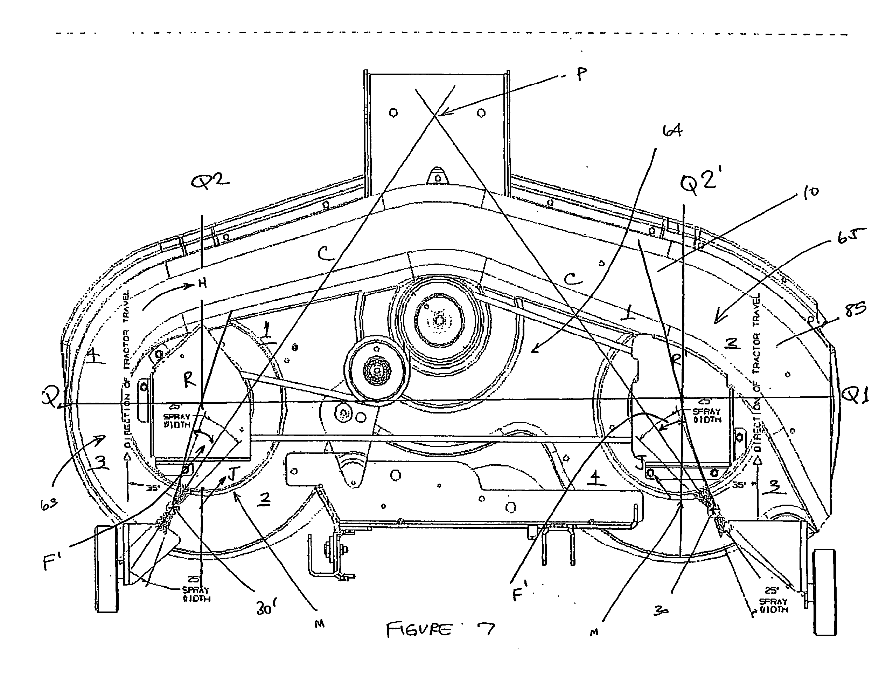

With reference now to Figure 7, an embodiment of the invention including a multi-nozzle mower deck is shown having three (3) mowing blades, shown generally at 63, 64, and 65. The mowing blades 63, 64 and 65 may rotate in the same direction, which may be a clockwise direction H. The nozzles 30, 30' may be oriented such that the centerline of water discharge C is substantially perpendicular to a tangent of the circle M, as defined by the rotation of the mower blade. Additionally, the nozzles 30, 30' are positioned such that the respective centerlines of discharge C of each nozzle 30, 30' may intersect at a point P within the interior of the mower deck 10. In this embodiment, the entire spray width of the water stream is directed onto the circumference of the rotating mower blade 63, 65 thus directly spraying all of the water being dispensed in a first direction onto the blade 63, 65 for cleaning purposes. The opposite end direction of water discharge is therefore directed onto the sides of the interior of the mower deck 10. The centerlines of water discharge C of the nozzles 30, 30' may form an angle F' with a line defined between the center of the nozzle and the center of the mowing blade rotation R, R'. The angle F' may be chosen such that the water stream is directed onto the mower blades. In one embodiment, angle F' ranges from -20 degrees to +20 degrees. It should be noted that both centerlines of discharge direct inward in a first water stream direction J. This serves to effectively introduce the water stream into the pathway of motion of the rotating blades, which propels the water about the interior of the mower deck.

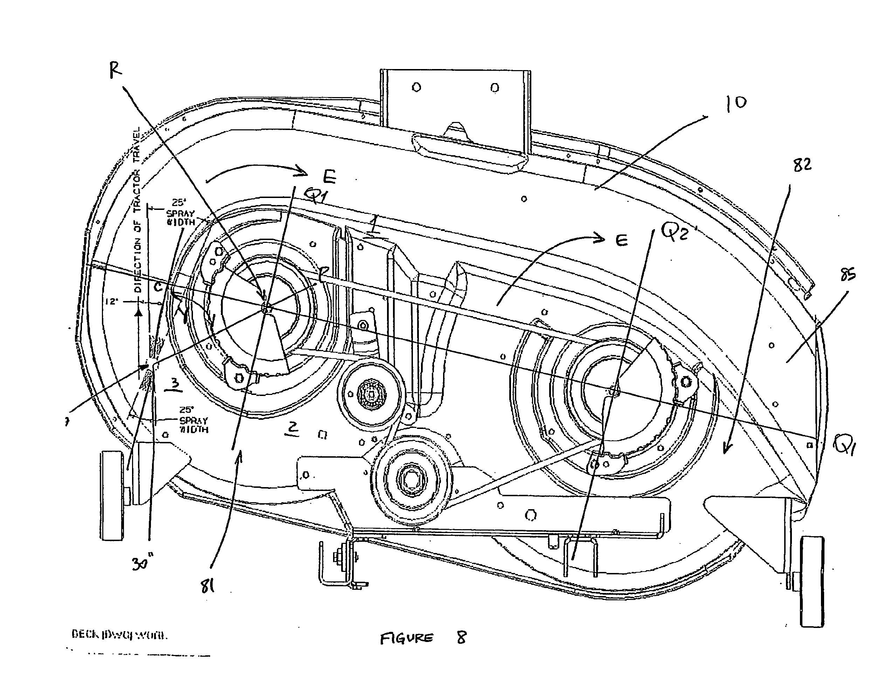

With reference now to Figure 8, an alternate embodiment of the invention including a single nozzle mower deck is shown having two mowing blades with a side discharge. The mowing blades 81, 82 rotate in the same direction E directing the severed debris out the side discharge chute 85. In this embodiment, the nozzle 30" may be position proximate to the outer periphery of the mower deck 10. The nozzles 30" may be directed such that the centerline of water discharge C is directed onto the mowing blade 81 proximate to the nozzle 30". It is noted that the water stream is not directed onto the spindle of the proximate mowing blade 81, but onto the blade 81 itself. The spray width of the nozzle 30" may be chosen as described above, which may be 25 degrees but may also range from range 20 degrees to 30 degrees. In this manner, the spray width overlaps the rotation of the blade 81 wherein the water is directed onto the second blade 82 for use in cleaning debris off of the blades 81, 82, as well as the interior of the mower deck 10. It should be noted again that the water is sprayed from the nozzle in two substantially opposite directions, as shown in the figures. The angle Y, as defined above, for this embodiment may range from 50 degrees to 130 degrees. It is noted that both the embodiment of Figure 6 and that of Figure 8 utilize one less water nozzle than the number of mowing blades present in the mower deck. In this manner, effective use of a minimal number of nozzles is incorporated while effectively cleaning the interior of the mower deck 10.

With reference to Figure 6, a mowing blade radius L is defined from the center point of rotation of the mowing blade to the outer edge of the blade. The nozzles 30, 30', 30" respectively may be positioned substantially at a radius L from the center of rotation of the mowing blades proximate to the respective nozzle. This functions to direct water onto the outermost edge mowing blade where the greatest momentum of the mowing blade can distribute water about the interior of the mower deck 10. However, the nozzles 30, 30', 30" may also be positioned at a radius from the center of rotation within the range of minus 0.8L to plus 1.2L. It should be noted that a longer radius, that is the "plus" radius, may be limited by the position of the interior walls of the mower deck 10.

With continued reference to Figures 6 through 8, the nozzles 30, 30', 30" may be placed in one of four quadrants. The four quadrants may be defined in part by a first axis having axis points coincident with the center points of rotation of the outermost mowing blades. Each mowing blade 61, 62, 63, 65, 81, has four quadrants directly surrounding the mowing blade center of rotation and which in one of the quadrants the cleaning nozzle may be placed. In Figure 6, mowing blades 61, 62 have respective centers of rotation R, R'. The first axis Q1 is defined by points R, R'. Second axes Q2, Q2' are defined for each blade center R, R' as a line perpendicular to the first axis Q1 and passing through the respective mowing blade centers of rotation R, R'. Resultantly, Axes Q1 and Q2, Q2' respectively define the four quadrants around the centers of rotation R, R' of the mowing blades. The four quadrants of each mowing blade center may be labeled Quadrants 1 through 4. For the embodiment shown in Figure 6 having two mowing blades 61, 62 with a center discharge, Quadrant 1 is defined as the quadrant closest to the center discharge chute 85' debris exiting point, as shown in Figure 6. Quadrants 2 through 4 are labeled successively following the direction of travel of the mowing blade. In this manner, the nozzles 30, 30' may be placed in the second quadrants respectively at a radius and orientation as defined above. The placement of the nozzle 30, 30' in this manner maximizes the effective cleaning power of the 25 degree spray width water stream in cleaning the interior of the mower deck 10.

With reference to Figures 7 and 8, alternate embodiments of mower deck configurations and nozzle placement will now be discussed. Figures 7 and 8 depict a side discharge debris chute 85. In these embodiments, the mowing blades 63, 65 and 81, 82 rotate in the same direction respectively, namely clockwise. For the embodiments of Figures 7 and 8, Quadrant 1 is defined as the quadrant closest to the discharge chute 85 and interior to the mower deck 10. By interior it is meant that that portion of the mower deck between the center points of rotation of the mowing blades is the interior part of the mower deck. This is contrasted to the area between center points of rotation and the wall of the mower deck. Quadrants 2 through 4 are labeled successively following the direction of travel of the mowing blades. Utilizing this convention, the nozzles 30, 30', 30" may be located in Quadrants 3 respectively at a radius and orientation as defined above. The placement of the nozzle 30, 30', 30" in this manner maximizes the effective cleaning power of the 25 degree spray width water stream in cleaning the interior of the mower deck 10. It is again noted that for the embodiment of Figure 8 only one nozzle exists which effectively cleans the mower deck 10 because of the position and orientation of the nozzle 30".

The preferred embodiments have been described, hereinabove. It will be apparent to those skilled in the art that the above methods may incorporate changes and modifications without departing from the general scope of this invention. It is intended to include all such modifications and alterations in so far as they come within the scope of the appended claims or the equivalents thereof.

## Claims

1. A mower deck (10) comprising:
a deck housing (13) having an interior (19) and an exterior (21);
a predetermined number of mowing blades (25, 63, 64, 65, 81, 82) operatively rotatably connected with respect to the deck housing (13); and
a predetermined number of nozzles (30, 30', 30") having first and second ends respectively, the first ends (32) of the predetermined number of nozzles extending into the interior of the mower deck housing, the second ends (33) of the predetermined number of nozzles extending exterior to the mower deck housing, wherein the predetermined number of nozzles each include an aperture (36) for discharging an associated water stream;
the mower deck **characterized in that** the predetermined number ofnozzles is one less than the predetermined number of mowing blades.

2. The mower deck of claim 1, wherein each of the predetermined number of mowing blades has a radius L from the center of rotation to the outer edge of the each of the predetermined number of mowing blades, wherein each of the predetermined number of nozzles is located proximate to one of the predetermined number of mowing blades within the rage of 0.8L to 1.2L.

3. The mower deck of claim 2 comprising first and second cutting blades (81, 82), wherein the cutting blades rotate in the same direction and the nozzle (30") includes an aperture for discharging an associated water stream having a spray width ranging between 20 and 30 degrees, wherein the nozzle is directed such that the centerline of water discharge C is directed onto the mowing blade (81) proximate to the nozzle such that the spray width overlaps the rotation of the blade (81) such that the water is directed onto the second blade (82) for use in cleaning debris off of the blades (81,82).

4. The mower deck of claim 3 wherein a line P is defined by the center of the nozzle and the center point of rotation R of the mowing blade (81) and the water nozzle (30") is oriented such that an angle Y is formed between the centerline of water discharge C and the line P, wherein the angle Y ranges from 50 degrees to 130 degrees.

5. The mower deck of claim 1, wherein each nozzle includes an aperture for discharging an associated water stream having a spray width ranging between 20 and 30 degrees.

6. The mower deck of claim 5, wherein the spray width is 25 degrees.

7. The mower deck of claim 1 comprising:
a first cutting blade (63), a second cutting blade (64), and a third cutting blade (65) positioned between said first and second cutting blades, the first, second and third cutting blades being operatively rotatably connected with respect to the mower deck, wherein each of the cutting blades defines a circumference of travel marking the outer edge of the blade, and wherein a first axis is defined as passing through the centers of rotation of the first and second cutting blades;
a first nozzle (30) and a secondnozzle (30'), the nozzles **characterized in that** the first nozzle is positioned aft of the first axis, outboard of the center of rotation of the first blade, and adjacent the circumference of travel of the first blade, and wherein the first nozzle includes a centerline of discharge that is directed between the center of rotation of the first cutting blade and the center of rotation of the third cutting blade; and wherein the second nozzle is positioned aft of the first axis, outboard of the center of rotation of the second blade, and adjacent the circumference of travel of the second blade, and wherein the second nozzle includes a centerline of discharge that is directed between the center of rotation of the second cutting blade and the center of rotation of the third cutting blade.

8. The mower deck of claim 7, wherein the nozzles include an aperture for discharging an associated water stream having a spray width ranging between about 20 and 30 degrees.

9. The mower deck of claim 7, wherein the centerline of discharge of each of the nozzles forms an angle (F') with a line extending through the respective nozzle and a center of rotation of the adjacent cutting blade, wherein angle (F') is less than or equal to 20 degrees.

## Patentansprüche

1. Mäherplattform (10), umfassend:
ein Plattformgehäuse (13), das einen Innenbereich (19) und einen Außenbereich (21) hat;
eine vorbestimmte Anzahl an Mähmessern (25, 63, 64, 65, 81, 82), die betriebsmäßig drehbar mit dem Plattformgehäuse (13) verbunden sind; und
eine vorbestimmte Anzahl an Düsen (30, 30', 30"), die erste bzw. zweite Enden haben, wobei die ersten Enden (32) der vorbestimmten Anzahl an Düsen sich in den Innenbereich des Mäherplattformgehäuses erstrecken, die zweiten Enden (33) der vorbestimmten Anzahl an Düsen sich in den Außenbereich des Mäherplattformgehäuses erstrecken, wobei die vorbestimmte Anzahl an Düsen jeweils eine Öffnung (36) zum Abführen eines dazugehörigen Wasserstroms aufweisen;
wobei die Mäherplattform **dadurch gekennzeichnet ist, daß** die vorbestimmte Anzahl an Düsen um 1 kleiner ist als die vorbestimmte Anzahl an Mähmessern.

2. Mäherplattform nach Anspruch 1, bei welcher jedes der vorbestimmten Anzahl an Mähmessern einen Radius L vom Rotationszentrum zu der Außenkante jedes der vorbestimmten Anzahl an Mähmessern hat, wobei jede der vorbestimmten Anzahl an Düsen innerhalb des Bereichs von 0,8 L bis 1,2 L in der Nähe eines der vorbestimmten Anzahl an Mähmessern angeordnet ist.

3. Mäherplattform nach Anspruch 2, umfassend erste und zweite Schneidmesser (81, 82), wobei die Schneidmesser sich in dieselbe Richtung drehen und die Düse (30") eine Öffnung aufweist zum Abführen eines dazugehörigen Wasserstroms, der einen Sprühweitenbereich zwischen 20 und 30° hat, wobei die Düse derart gerichtet ist, daß die Mittellinie der Wasserabgabe C auf das Mähmesser (81) in der Nähe der Düse gerichtet ist, derart, daß die Sprühweite die Drehung des Messers (81) überlappt, derart, daß das Wasser auf das zweite Messer (82) gerichtet ist zur Verwendung beim Abspülen von Abfall von den Messern (81, 82).

4. Mäherplattform nach Anspruch 3, bei welcher eine Linie P definiert ist durch das Zentrum der Düse und den Rotationsmittelpunkt R des Mähmessers (81) und die Wasserdüse (30") derart orientiert ist, daß ein Winkel Y zwischen der Mittellinie der Wasserabgabe C und der Linie P ausgebildet wird, wobei der Winkel Y im Bereich von 50° bis 130° liegt.

5. Mäherplattform nach Anspruch 1, bei welcher jede Düse eine Öffnung zur Abgabe eines dazugehörigen Wasserstroms mit einer Sprühweite in einem Bereich zwischen 20 und 30° aufweist.

6. Mäherplattform nach Anspruch 5, bei welcher die Sprühweite 25° ist.

7. Mäherplattform nach Anspruch 1, umfassend:
ein erstes Schneidmesser (63), ein zweites Schneidmesser (64) und ein drittes Schneidmesser (65), das zwischen dem ersten und zweiten Schneidmesser angeordnet ist, wobei das erste, zweite und dritte Schneidmesser betriebsmäßig drehbar mit der Mäherplattform verbunden sind, wobei jedes Schneidmesser einen Bewegungsumfang definiert, der den Außenrand des Messers angibt und wobei eine erste Achse definiert wird, als sie durch die Rotationszentren des ersten und zweiten Schneidmessers verläuft;
eine erste Düse (30) und eine zweite Düse (30'), wobei die Düsen **dadurch gekennzeichnet sind, daß** die erste Düse hinterwärts der ersten Achse, außerhalb des Rotationszentrums des ersten Messers angeordnet ist und angrenzt an den Bewegungsumfang des ersten Messers, und
wobei die erste Düse eine Abgabemittellinie aufweist, die zwischen das Rotationszentrum des ersten Schneidmessers und das Rotationszentrum des dritten Schneidmessers gerichtet ist; und wobei die zweite Düse hinterwärts der ersten Achse, außerhalb des Rotationszentrums des zweiten Messers angeordnet ist und angrenzend an den Bewegungsumfang des zweiten Messers, und wobei die zweite Düse eine Abgabemittellinie aufweist, die zwischen das Rotationszentrum des zweiten Schneidmessers und das Rotationszentrum des dritten Schneidmessers gerichtet ist.

8. Mäherplattform nach Anspruch 7, bei welcher die Düsen eine Öffnung zur Abgabe eines dazugehörigen Wasserstrom mit einer Sprühweite aufweisen, die zwischen etwa 20 und 30° liegt.

9. Mäherplattform nach Anspruch 7, bei welcher die Abgabemittellinie jeder der Düsen einen Winkel (F') mit einer Linie ausbildet, die durch die jeweilige Düse und ein Rotationszentrum des angrenzenden Schneidmessers verläuft, wobei der Winkel (F') kleiner oder gleich 20° ist.

## Revendications

1. Plateau de tondeuse (10), comportant :
un boîtier de plateau (13) ayant un intérieur (19) et un extérieur (21),
un nombre prédéterminé de lames de tonte (25, 63, 64, 65, 81, 82) connectées de manière rotative et de manière opérationnelle par rapport au boîtier de plateau (13), et
un nombre prédéterminé de buses (30, 30', 30") ayant des premières et secondes extrémités, respectivement, les premières extrémités (32) du nombre prédéterminé de buses s'étendant dans l'intérieur du boîtier de plateau de tondeuse, les secondes extrémités (33) du nombre prédéterminé de buses s'étendant à l'extérieur du boîtier de plateau de tondeuse, le nombre prédéterminé de buses comportant chacune une ouverture (36) pour évacuation d'un flux d'eau associé,
le plateau de tondeuse étant **caractérisé en ce que** le nombre prédéterminé de buses est égal au nombre prédéterminé de lames de tonte diminué d'une unité.

2. Plateau de tondeuse selon la revendication 1, dans lequel chacune du nombre prédéterminé de lames de tonte a un rayon L à partir du centre de rotation, vers le bord extérieur de chacune du nombre prédéterminé de lames de tonte, dans lequel chacune du nombre prédéterminé de buses est positionnée à proximité d'une du nombre prédéterminé de lames de tonte dans la plage de 0,8 L à 1,2 L.

3. Plateau de tondeuse selon la revendication 2, comportant des première et seconde lames coupantes (81, 82), dans lequel les lames coupantes tournent dans la même direction, et la buse (30") comporte une ouverture pour évacuer un flux d'eau associé ayant une largeur de pulvérisation dans la plage allant de 20 à 30 degrés, dans lequel la buse est dirigée de telle sorte que l'axe central d'évacuation d'eau C est dirigé sur la lame de tonte (81) à proximité de la buse, de telle sorte que la largeur de pulvérisation chevauche la rotation de la lame (81) de telle manière que l'eau est dirigée jusque sur la seconde lame (82) pour une utilisation lors du nettoyage de débris à l'extérieur des lames (81, 82).

4. Plateau de tondeuse selon la revendication 3, dans lequel une ligne P est définie par le centre de la buse et le point de rotation central R de la lame de tonte (81), et la buse d'eau (30") est orientée de telle sorte qu'un angle Y est formé entre l'axe central d'évacuation d'eau C et la ligne P, dans lequel l'angle Y est dans la plage allant de 50 degrés à 130 degrés.

5. Plateau de tondeuse selon la revendication 1, dans lequel chaque buse comporte une ouverture pour évacuer un flux d'eau associé ayant une largeur de pulvérisation dans la plage allant de 20 à 30 degrés.

6. Plateau de tondeuse selon la revendication 5, dans lequel la largeur de pulvérisation est de 25 degrés.

7. Plateau de tondeuse selon la revendication 1, comportant :
une première lame coupante (63), une deuxième lame coupante (64) et une troisième lame coupante (65) positionnée entre lesdites première et deuxième lames coupantes, les première, deuxième et troisième lames coupantes étant reliées de manière rotative et de manière opérationnelle par rapport au plateau de tondeuse, chacune des lames coupantes définissant une circonférence de déplacement marquant le bord extérieur de la lame, et un premier axe étant défini comme passant à travers les centres de rotation des première et seconde lames coupantes ;
une première buse (30) et une deuxième buse (30'), les buses étant **caractérisées en ce que** la première buse est positionnée en arrière du premier axe, à l'extérieur du centre de rotation de la première lame, et proche de la circonférence de déplacement de la première lame, et dans lequel la première buse comporte un axe central d'évacuation qui est dirigé entre le centre de rotation de la première lame coupante et le centre de rotation de la troisième lame coupante ; et dans lequel la deuxième buse est positionnée en arrière du première axe, à l'extérieur du centre de rotation de la deuxième lame, et proche de la circonférence de déplacement de la deuxième lame, et dans lequel la deuxième buse comporte un axe central d'évacuation qui est dirigé entre le centre de rotation de la deuxième lame coupante et le centre de rotation de la troisième lame coupante.

8. Plateau de tondeuse selon la revendication 7, dans lequel les buses comportent une ouverture pour évacuer un flux d'eau associé ayant une largeur de pulvérisation dans la plage allant d'environ 20 à environ 30 degrés.

9. Plateau de tondeuse selon la revendication 7, dans lequel l'axe central d'évacuation de chacune des buses forme un angle (F') avec une ligne s'étendant à travers la buse respective et un centre de rotation de la lame coupante à proximité, dans lequel l'angle (F') est inférieur ou égal à 20 degrés.
